**Europäisches Patentamt**

**European Patent Office**

**Office européen des brevets**

(19)

(11) Veröffentlichungsnummer: **0 037 368**

**A1**

(12) # EUROPÄISCHE PATENTANMELDUNG

(21) Anmeldenummer: 81730030.4

(22) Anmeldetag: 09.03.81

(51) Int. Cl.³: **H 02 K 49/10**

(30) Priorität: 28.03.80 DE 3012740

(43) Veröffentlichungstag der Anmeldung:
07.10.81 Patentblatt 81/40

(84) Benannte Vertragsstaaten:
CH FR GB LI

(71) Anmelder: SIEMENS AKTIENGESELLSCHAFT
Postfach 22 02 61
D-8000 München 22(DE)

(72) Erfinder: Laenens, Werner
Küsterstrasse 14
D-1000 Berlin 20(DE)

(54) **Magnetische Zentral-Drehkupplung.**

(57) Die Erfindung bezieht sich auf eine magnetische Zentral-Drehkupplung mit äußeren Magneteinrichtungen auf der äußeren Kupplungshälfte und einer inneren Magneteinrichtung auf der inneren Kupplungshälfte, wobei die Magnetpole der ausseren Magneteinrichtung in einem Winkel von etwa 30° zur Längsachse der inneren Magneteinrichtung ausgerichtet sind. Um ein hohes übertragbares Drehmoment bei geringem Herstellungsaufwand der Zentral-Drehkupplung zu erreichen, enthalten die Magneteinrichtungen (8, 9, 10) stabförmige Permanentmagnete (15, 16, 17, 18, 20, 21); die Permanentmagnete der äußeren Magneteinrichtungen (8, 9) liegen an Orten der Magnetpole dieser Magneteinrichtungen und die Permanentmagnete der inneren Magneteinrichtung (10) liegen so, daß ihre Magnetpole in einem Winkel von 90° zur Längsachse (19) ausgerichtet sind. Die Erfindung ist vor allem bei Flüssigkeitszählern anwendbar.

FIG 2

EP 0 037 368 A1

COMPLETE DOCUMENT

SIEMENS AKTIENGESELLSCHAFT          Unser Zeichen
Berlin und München                  VPA 80 P 3730 E

Magnetische Zentral-Drehkupplung

Die Erfindung bezieht sich auf eine magnetische Zentral-
Drehkupplung mit einer inneren Kupplungshälfte, auf
der eine innere Magneteinrichtung mit ihrer Längsachse quer zur Drehachse liegt, wobei die Magneteinrichtung zwei Paare von Magnetpole aufweist, die in
einem Winkel zur Längsachse der Magneteinrichtung ausgerichtet sind, und mit eher äußeren Kupplungshälfte,
auf der sich symmetrisch zur Längsachse der inneren
Magneteinrichtung jeweils eine äußere Magneteinrichtung
befindet, deren Magnetpole denen der inneren Magneteinrichtung benachbart sind und in einem Winkel von etwa
30° zur Längsachse der inneren Magneteinrichtung ausgerichtet sind.

Bei einer bekannten magnetischen Zentral-Drehkupplung
dieser Art (O. Richter, R.v.Voss "Bauelemente der Feinmechanik", 8. Auflage, Verlag Technik Berlin, 1959,
Seite 330) bestehen die Magneteinrichtungen auf der
äußeren Kupplungshälfte aus jeweils einem Permanentmagneten, der als Kreissegment ausgebildet ist; die magnetischen Feldlinien dieser Permanentmagnete treten an
Magnetpolen aus, die durch in Richtung auf die innere
Kupplungshälfte hervortretende Polansätze dieser Permanentmagnete gebildet sind. Eine Magneteinrichtung auf
der inneren Kupplungshälfte der bekannten Zentral-Drehkupplung enthält nur einen Permanentmagneten, der in
Richtung seiner Längsachse magnetisiert ist und an seinen
Enden verzweigte Polansätze aufweist, die jeweils ein
Paar von Magnetpole bilden; diese Magnetpole sind in
einem Winkel zur Längsachse der Magneteinrichtung ausgerichtet und liegen symmetrisch beiderseits dieser Achse.

Ag 3 Sby / 27.03.1980

Nachteilig ist bei dieser bekannten Zentral-Drehkupplung, daß die Magneteinrichtungen zur Gewährleistung eines ausreichend hohen. zu übertragenden Drehmoments relativ große und aufwendig hergestellte Permanentmagnete enthalten müssen, die zwangsläufig auch ein nicht zu vernachlässigendes Gewicht haben, was zu Lagerreibungsverlusten in der Zentral-Drehkupplung führt. Die Herstellung der kreissegmentförmigen Permanentmagnete der äußeren Magneteinrichtungen mit gesonderten Polansätzen sowie die Herstellung der verzweigten Polansätze der inneren Magneteinrichtung führt außerdem zu einem zusätzlichen Fertigungsaufwand.

Der Erfindung liegt die Aufgabe zugrunde, eine magnetische Zentral-Drehkupplung zu schaffen, bei der mit geringem Herstellungsaufwand ein relativ . hohes, übertragbares Drehmoment erreicht werden kann.

Zur Lösung dieser Aufgabe enthalten bei einer Zentral-Drehkupplung der eingangs angegebenen Art erfindungsgemäß die Magneteinrichtungen jeweils zwei stabförmige Permanentmagnete, wobei die stabförmigen Permanentmagnete der äußeren Magneteinrichtungen an den Orten der Magnetpole liegen und die stabförmigen Permanentmagnete der inneren Magneteinrichtung so liegen, daß ihre Magnetpole in einem Winkel von 90° zur Längsachse ausgerichtet sind.

Vorteilhaft ist die erfindungsgemäße Zentral-Drehkupplung u. a. insofern, als die Magneteinrichtungen aus stabförmigen Permanentmagneten bestehen, die alle eine gleiche, einfache Form haben und daher in gleicher Weise hergestellt sind; außerdem können sie infolge ihrer geringen Abmessungen auf einfache Weise bei geringem Raumbedarf an den Kupplungshälften angebracht werden. Die Magnetpole haben keine gesonderten Polansätze, die zusätzliche Bearbeitungsvorgänge nötig machen; die Magneteinrichtunten haben auch ein vergleichsweise geringes Gewicht. Außerdem gewährleistet der Aufbau der erfindungsgemäßen Zentral-Drehkupplung einen günstigen magnetischen Feldlinienverlauf und somit einen hohen Durchgriff der magnetischen Feldlinien zwischen den Kupplungshälften, was zu einem hohen übertragbaren Drehmoment führt.

Besonders vorteilhaft ist die erfindungsgemäße Zentral-Drehkupplung gemäß einer Ausführungsform, bei der gleichnamige Magnetpole der stabförmigen Permanentmagnete der inneren Magneteinrichtung auf unterschiedlichen Seiten der Längsachse dieser Magneteinrichtung liegen. Diese Anordnung der Permanentmagnete der inneren Magneteinrichtung gewährleistet ein besonders hohes übertragbares Drehmoment, da die Zentral-Drehkupplung auch nach einem Schlupf um $180^{\circ}$ erneut in eine stabile Lage gelangt. Die Permanentmagnete der äußeren Magneteinrichtungen sind so angeordnet, daß in den stabilen Lagen der Zentral-Drehkupplung Anziehungskräfte zwischen den äußeren Magneteinrichtungen und der inneren Magneteinrichtung wirksam sind.

Bei einer anderen vorteilhaften Ausführungsform der erfindungsgemäßen Zentral-Drehkupplung liegen gleichnamige Magnetpole der stabförmigen Permanentmagnete der inneren Magneteinrichtung auf gleichen Seiten der Längsachse dieser Magneteinrichtung. Bei dieser Ausführungsform ist vorteilhaft, daß eine relativ starre Kupplung entsteht.

Vorteilhaft ist außerdem, wenn eine die innere Kupplungshälfte tragende Welle aus einem magnetisch nicht leitendem Material besteht. Bei einer solchen Welle ist ein unerwünschter Feldlinienschluß über die Welle zur äußeren Kupplungshälfte verhindert; dies führt zu einer Erhöhung des magnetischen Durchgriffs zwischen den Kupplungshälften im Bereich der Magneteinrichtungen und somit zu einer Erhöhung des übertragbaren Drehmomentes.

Weiterhin ist vorteilhaft, wenn ein magnetisch leitender Rückschlußring an der äußeren Kupplungshälfte angebracht ist, der die stabförmigen Permanentmagnete der äußeren Magneteinrichtungen außen umfaßt. Dieser Rückschlußring dient der optimalen Führung der magnetischen Feldlinien an den von der inneren Kupplungshälfte abgewandten Seiten der Permanentmagnete und bewirkt somit ebenfalls eine Erhöhung des magnetischen Durchgriffs zwischen den Kupplungshälften.

Vorteilhaft ist vor allem, wenn die stabförmigen Permanentmagnete aus einem Sintermaterial aus Kobalt und Seltenen Erden bestehen. Derartige Permanentmagnete weisen eine im Verhältnis zu ihrem Volumen außerordentlich hohe magnetische Feldstärke auf, so daß die erfindungsgemäße Zentral-Drehkupplung mit relativ geringen Abmessungen und somit geringem Eigengewicht aufgebaut werden kann und trotzdem ein hohes übertragbares Drehmoment gewährleistet. Durch das geringe Eigengewicht der Kupplungshälften können die demzufolge geringen Lagerkräfte ggf. allein durch die außerordentliche hohe Feldstärke der Permanentmagnete aufgefangen werden, was zu einer Verbesserung des Betriebsverhaltens der Zentral-Drehkupplung führt.

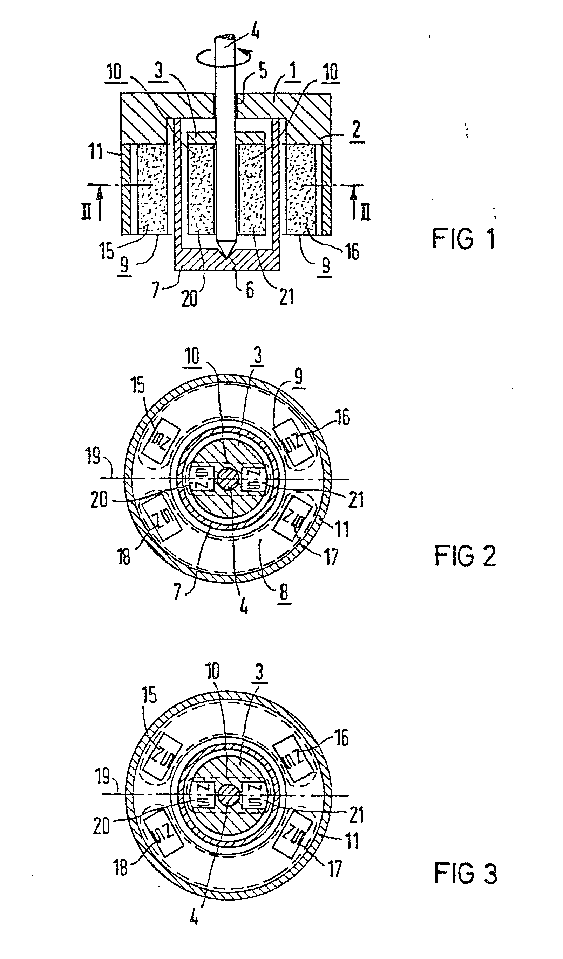

Die Erfindung wird anhand der Figuren erläutert, wobei Fig. 1 eine schematische Darstellung eines Ausführungsbeispiels der erfindungsgemäßen Zentral-Drehkupplung und

Fig. 2 einen Schnitt durch dasselbe Ausführungsbeispiel entlang der Linien II/II sowie
Fig. 3 einen Schnitt durch ein weiteres Ausführungsbeispiel darstellt.

Aus der Fig. 1 ist eine magnetische Zentral-Drehkupplung 1 ersichtlich, die eine äußere Kupplungshälfte 2 und eine innere Kupplungshälfte 3 aufweist. Die innere Kupplungshälfte 3 ist auf einer Welle 4 befestigt, die mittels Lagerstellen 5 und 6 gehalten ist. Zwischen der inneren und der äußeren Kupplungshälfte befindet sich ein topfförmiger Trennkörper 7 aus magnetisch nicht leitendem Material. Die äußere Kupplungshälfte 2 weist äußere Magneteinrichtungen 8 und 9 (siehe auch Fig. 2) auf; die innere Kupplungshälfte 3 trägt eine innere Magneteinrichtung 10. Die äußere Kupplungshälfte 2 enthält weiterhin einen magnetisch leitenden Rückschlußring 11, der an den der inneren Kupplungshälfte 3 abgewandten Seiten der Magneteinrichtungen 8 und 9 angebracht ist.

Die äußeren Magneteinrichtungen 8 und 9 an der äußeren Kupplungshälfte 2 enthalten - wie aus der Fig. 2 ersichtlich - stabförmige Permanentmagnete 15 und 16 sowie 17 und 18, wobei diese Permanentmagnete in einem Winkel von 30° zur Längsachse 19 der inneren Magneteinrichtung 10 /ausgerichtet und gemeinsam vom Rückschlußring 11 außen umschlossen sind. Die innere Magneteinrichtung 10 enthält zwei stabförmige Permanentmagnete 20 und 21, die in einem Winkel von 90° zur Längsachse 19 ausgerichtet sind und deren gleichnamige Magnetpole auf unterschiedlichen Seiten der Längsachse 19 liegen. In der stabilen Lage der Zentral-Drehkupplung 1 bildet sich ein geschlossener Feldlinienverlauf zwischen der inneren Magneteinrichtung 10
und den äußeren Magneteinrichtungen 8 und 9 aus, da
immer Magnetpole unterschiedlicher Polarität einander
benachbart sind.

Das Ausführungsbeispiel nach Fig. 3 unterscheidet
sich von dem nach der Fig. 2 insofern, als daß gleichnamige Magnetpole der stabförmigen Permanentmagnete
20 und 21 auf gleichen Seiten der Längsachse 19 liegen.
Auch bei diesem Ausführungsbeispiel sind die Permanentmagnete 15 bis 18 der äußeren Magneteinrichtungen 8
und 9 so angeordnet, daß in der stabilen Lage der
Zentral-Drehkupplung 1 Magnetpole unterschiedlicher
Polarität einander benachbart sind und sich somit ein
geschlossener Feldlinienverlauf ausbildet.

Ein hohes übertragbares Drehmoment und somit optimales
Betriebsverhalten ist bei beiden Ausführungsformen
aufgrund der Verwendung von stabförmigen Permanentmagneten 15 bis 18 und 20, 21 aus einem Sintermaterial
aus Kobalt und Seltenen Erden und deren vorteilhafte
Anordnung an den Kupplungshälften 2 und 3 gewährleistet.

6 Ansprüche
3 Figuren

Patentansprüche

1. Magnetische Zentral-Drehkupplung mit
   a) einer inneren Kupplungshälfte, auf der
      a1) eine innnere Magneteinrichtung mit ihrer Längsachse quer zur Drehachse liegt, wobei
          a11) die Magneteinrichtung zwei Paare von Magnetpolen aufweist, die in einem Winkel zur
               Längsachse der Magneteinrichtung ausgerichtet sind, und mit
   b) einer äußeren Kupplungshälfte, auf der sich
      b1) symmetrisch zur Längsachse der inneren Magnet-
          einrichtung jeweils eine äußere Magnetein-
          richtung befindet, deren
          b11) Magnetpole denen der inneren Magneteinrichtung benachbart sind und
          b12) in einem Winkel von etwa $30^{\circ}$ zur Längs-
               achse der inneren Magneteinrichtung aus-
               gerichtet sind,
   d a d u r c h   g e k e n n z e i c h n e t , daß
   c) die Magneteinrichtungen (8, 9, 10) jeweils zwei
      stabförmige Permanentmagnete enthalten, wobei
      c1) die stabförmigen Permanentmagnete (15, 16,
          17, 18) der äußeren Magneteinrichtungen
          (8, 9) an den Orten der Magnetpole liegen und
      c2) die stabförmigen Permanentmagnete (20, 21) der
          innneren Magneteinrichtung (10) so liegen,
          daß ihre Magnetpole in einem Winkel von $90^{\circ}$
          zur Längsachse (19) ausgerichtet sind (Fig. 2).

2. Zentral-Drehkupplung nach Anspruch 1, d a d u r c h
   g e k e n n z e i c h n e t , daß
   d) gleichnamige Magnetpole der stabförmigen Permanentmagnete (20, 21) der inneren Magneteinrichtung
      (10) auf unterschiedlichen Seiten der Längsachse
      (19) dieser Magneteinrichtung liegen (Fig. 2).

3. Zentral-Drehkupplung nach Anspruch 1, d a d u r c h
g e k e n n z e i c h n e t , daß

    e) gleichnamige Magnetpole der stabförmigen Permanentmagnete (20, 21) der inneren Magneteinrichtung (10) auf gleichen Seiten der Längsachse
(19) dieser Magneteinrichtung liegen (Fig.3).

4. Zentral-Drehkupplung nach einem der vorhergehenden
Ansprüche, d a d u r c h  g e k e n n z e i c h n e t,
daß

    f) eine die innere Kupplungshälfte (3) tragende
Welle (4) aus einem magnetisch nicht leitendem
Material besteht (Fig. 1).

5. Zentral-Drehkupplung nach einem der vorhergehenden
Ansprüche, d a d u r c h  g e k e n n z e i c h n e t ,
daß

    g) ein magnetisch leitender Rückschlußring (11)
an der äußeren Kupplungshälfte (2) angebracht
ist, der

        g1) die stabförmigen Permanentmagnete (15, 16, 17,
18) der äußeren Magneteinrichtungen (8, 9)
außen umfaßt.

6. Zentral-Drehkupplung nach einem der vorhergehenden
Ansprüche, d a d u r c h  g e k e n n z e i c h n e t ,
daß

    h) die stabförmigen Permanentmagnete (15, 16, 17,
18, 20, 21) aus einem Sintermaterial aus Kobalt
und Seltenen Erden bestehen.

0037368

80 P 3730                    1/1

FIG 1

FIG 2

FIG 3

**0037368**

### Europäisches Patentamt

## EUROPÄISCHER RECHERCHENBERICHT

Nummer der Anmeldung

EP 81 73 0030

| EINSCHLÄGIGE DOKUMENTE | | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | |
| | US - A - 3 573 517 (OSTERSTROM)<br>* Spalte 5, Zeile 59 - Spalte 6, Zeile 5; Figur 10 *<br>-- | 1,5 | H 02 K 49/10 |
| | FR - A - 2 353 165 (KLAUS-UNION)<br>* Seite 7, Zeile 1 - Zeile 18; Zeile 38 - Seite 8, Zeile 11 *<br>-- | 1,5,6 | |
| A | FR - A - 1 427 335 (BAKKER) | | **RECHERCHIERTE SACHGEBIETE (Int. Cl.³)** |
| A | GB - A - 1 446 198 (STANDARD MAG-NET)<br>* Figur 5 *<br>-- | | H 02 K 49/10<br>G 01 D 5/06 |
| A | US - A - 3 224 410 (EPPRECHT) | | |
| A | FR - A - 904 189 (LUCIFER) | | |
| A | GB - A - 675 379 (NEILL) | | |
| A | DE - A - 1 423 884 (MARX) | | |
| A | DE - A - 2 513 001 (HALLMANN) | | |
| A | DE - B - 1 251 418 (GRUGELSBERG)<br>---- | | **KATEGORIE DER GENANNTEN DOKUMENTE**<br>X: von besonderer Bedeutung<br>A: technologischer Hintergrund<br>O: nichtschriftliche Offenbarung<br>P: Zwischenliteratur<br>T: der Erfindung zugrunde liegende Theorien oder Grundsätze<br>E: kollidierende Anmeldung<br>D: in der Anmeldung angeführtes Dokument<br>L: aus andern Gründen angeführtes Dokument |
| | Der vorliegende Recherchenbericht wurde für alle Patentansprüche erstellt | | &: Mitglied der gleichen Patentfamilie, übereinstimmendes Dokument |
| Recherchenort<br>Den Haag | Abschlußdatum der Recherche<br>18-06-1981 | | Prüfer<br>RANDES |

EPA form 1503.1  06.78